# EUROPEAN PATENT APPLICATION

(11) **EP 1 239 387 A2**
(43) Date of publication of application: **11.09.2002**
(21) Application number: 01118695.4
(22) Date of filing: 03.08.2001
(51) Int. Cl.: G06F 17/60

(54) **Facilities information service system**

(30) Priority: 09.03.2001 JP 2001066155
(71) Applicant: Hitachi, Ltd., Chiyoda-ku, Tokyo 101-8010 (JP)
(72) Inventor: Kujirai, Toshihiro, Tokyo 100-8220 (JP); Shioya, Makoto, Tokyo 100-8220 (JP); Koga, Naoyuki, Tokyo 100-8220 (JP); Shibata, Toshiro, Tokyo 100-8220 (JP)
(74) Representative: Strehl Schübel-Hopf & Partner

(57) **Abstract**

To provide a facilities information service system in which a single server can conduct questionnaire surveys for a plurality of business facilities and in which each business facility can offer unique incentive award service to respondents of a questionnaire thereof. When a portable terminal 10 makes a request for facility introduction information on a facility registered in questionnaire survey service, a server 30 sends a facility introduction screen including a questionnaire guide message to the portable terminal. Then, when the portable terminal makes a request for participating in a questionnaire survey, the server sends a prepared questionnaire to the portable terminal to collect questionnaire response data from a user of the portable terminal and then issues an incentive award coupon in return for answering the questionnaire.

## Description

### Background of the invention

The present invention relates to a facilities information service system, and more particularly to a facilities information service system in which facility introduction information including a questionnaire guide message is provided from a facilities information server to a portable terminal connected through a communication network.

Several types of questionnaire survey systems or information service systems using portable terminals have been proposed. In JP-A-132774/1999 (conventional technique 1), for example, there is disclosed a navigation system wherein each of a plurality of portable navigation terminals is provided with a function for generating/processing questionnaires on facilities available to a user of each portable navigation terminal with respect to the current location thereof, wherein a user's response to a questionnaire displayed on the portable navigation terminal is sent to a centre, at which questionnaire response data regarding respective facilities is collected, and wherein, when each navigation terminal user makes a request for receiving questionnaire result data of a particular facility, information on the particular facility, including evaluation by a plurality of questionnaire respondents, is returned from the centre to the terminal user so that the information on the particular facility is displayed on the portable navigation terminal thereof.

In JP-A-151858/2000 (conventional technique 2), there is disclosed a telephone questionnaire collection system wherein a portable telephone user places a no-charge call to a telephone number of the telephone questionnaire collection system and responds to a questionnaire according to audio instruction messages, wherein the telephone questionnaire collection system records telephone charge discount point data for each caller's number (portable telephone number), and wherein the telephone questionnaire collection system informs a telephone billing system of the telephone charge discount point data as required so as to discount a telephone charge to each questionnaire respondent accordingly.

### Summary of the invention

In the above-cited conventional technique 1, result data of evaluation by a plurality of questionnaire respondents who have actually used each facility is presented to each navigation terminal user so that the navigation terminal user can find out a proper facility meeting expectations thereof. To conduct a questionnaire survey, it is required to provide a unique function for generating/processing questionnaires in each navigation terminal. Besides, in the conventional technique 1, although questionnaire result data is useful for persons who will use each facility concerned, there is a problem that questionnaire respondents can have little benefit immediately.

On the other hand, in the above-cited conventional technique 2, an incentive award to each questionnaire respondent is limited to a discount on a telephone charge thereto, i.e., it is impossible for a source-of-questionnaire entity to provide unique incentive award service to each questionnaire respondent. Moreover, in the conventional technique 2, at least one telephone number of the telephone questionnaire collection system (an access number for receiving answers from respondents) is required per questionnaire survey, and it is necessary to publicise, through the mass media such as magazines and newspapers, the telephone number of the telephone questionnaire collection system in advance together with a request message for response to a questionnaire.

It is therefore an object of the present invention to provide a facilities information service system having a questionnaire survey function which is capable of bringing benefit to a terminal user as well as a business organisation (business facility).

Another object of the present invention is to provide a facilities information service system which allows a single server to conduct questionnaire surveys for a plurality of business organisations (business facilities).

A further object of the present invention is to provide a facilities information service system which enables each business organisation (business facility) acting as a source-of-questionnaire entity to offer unique incentive award service to respondents of a questionnaire thereof.

In accomplishing these objects of the present invention and according to one aspect thereof, there is provided a facilities information service system in which a server supplies facility introduction information to a portable terminal connected through a communication network upon receiving a request therefor, wherein, when the portable terminal makes a request for introduction information on a particular source-of-questionnaire facility, the server sends a facility introduction screen including a questionnaire guide message to the portable terminal, and wherein, when the portable terminal makes a request for a questionnaire, the server sends a prepared questionnaire entry form to the portable terminal for collecting questionnaire response data from a user of the portable terminal.

More specifically, the server of the present invention is provided with a facilities information file for storing introduction information on each facility, and the server is provided with means for storing, into the facilities information file, facility introduction information including a questionnaire guide message which offers a coupon to be given in return for answering a questionnaire, coupon information, and questionnaire entry form information for each source-of-questionnaire facility. Upon receipt of a request for introduction information on a particular facility from the portable terminal, the server reads a facility introduction screen including a questionnaire guide message out of the facilities information file, and sends the facility introduction screen thus read out to the portable terminal. Note that, in the present invention, the term "coupon" signifies a certificate which may be redeemed for a cash discount, free-of-charge service, gift, or any other incentive award available at each facility.

The questionnaire entry form information mentioned above comprises a plurality of questionnaire screens each containing at least one query item and a plurality of selectable answer items, for example. When the portable terminal makes a request for a questionnaire, the server sends one of the questionnaire screens to the portable terminal. Then, according to a response from a user of the portable terminal, the server sends the next questionnaire screen to the portable terminal. In this manner, an answer to each query item is collected by the server. This arrangement makes it possible to prepare an arbitrary questionnaire as facility introduction information for each facility. Moreover, there may be provided such an arrangement that a plurality of questionnaire entry forms are prepared as introduction information on each facility and that any one of the questionnaire entry forms is selectively sent to the portable terminal according to predetermined questionnaire application conditions.

Further, in another aspect of the present invention, the server issues a new coupon to a portable terminal user who has answered a questionnaire according to predefined coupon information. In implementation of coupon issuance to a questionnaire respondent, the following provision may be made, for example: The server is provided with a coupon control file for storing data regarding relationship between an acquired coupon and a facility to which the acquired coupon is applicable in association with an identifier of a portable terminal user, and an acquired coupon information record, which indicates relationship between a source-of-questionnaire facility and coupon information predefined in the facilities information file, is added to the coupon control file in association with an identifier of a portable terminal user who has answered a questionnaire. In a modified arrangement, an acquired coupon information record for another facility having a business tie-up with the source-of-questionnaire facility may also be added to the coupon control file in addition to the acquired coupon information record for the source-of-questionnaire facility.

Still further, in the facilities information service system of the present invention, when a portable terminal makes a coupon redemption service request, the server sends a list of usable coupons to the portable terminal according to acquired coupon information associated with an identifier of a user of the portable terminal, and then acquired coupon information corresponding to a coupon which has been redeemed by the portable terminal user is set to a redeemed state. That is to say, at a facility that has issued the coupon concerned, the portable terminal user makes a coupon redemption service request, and then for redemption of the coupon, the portable terminal user shows acquired coupon information displayed on the portable terminal to an employee of the facility. The acquired coupon information is set to a redeemed state in response to coupon redemption input performed by the portable terminal user in the presence of the employee of the facility.

Furthermore, according to another aspect of the present invention, the server is provided with a questionnaire data file in which questionnaire response data from each portable terminal user is collected, and as requested by a source-of-questionnaire facility, the server outputs questionnaire result data collected in the questionnaire data file.

Still further, in the facilities information service system of the present invention, the server is provided with means for sending, to each portable terminal, a list of facilities meeting conditions specified by a user of the portable terminal, and when the portable terminal user specifies a facility in the list, the server sends introduction information on the specified facility to the portable terminal.

In a preferred embodiment of the present invention, the server is provided with means for selecting facilities meeting conditions specified by a user of each portable terminal in a group of facilities near the current location of the portable terminal, and for sending a list of facilities thus selected to the portable terminal. When the portable terminal user specifies a facility in the list, the server sends introduction information on the specified facility to the portable terminal. In another preferred embodiment of the present invention, the list of facilities contains an indication for identifying a facility which offers a coupon to be given in return for answering a questionnaire. Furthermore, in another preferred embodiment of the present invention, the list of facilities contains an indication for identifying a facility at which coupon redemption by each portable terminal user is available.

### Brief description of the drawings

FIG. 1 is a diagram showing an entire configuration of a facilities information system according to the present invention;
FIG. 2 is a configuration diagram showing a preferred embodiment of a facilities information server 30 indicated in FIG. 1;
FIG. 3 is a configuration diagram showing a preferred embodiment of a portable terminal 10 indicated in FIG. 1;
FIG. 4 is a general flowchart of a facilities information service terminal program to be carried out in the portable terminal 10;
FIG. 5 is a diagram for explaining relationship between terminal locations and geographic coverage boundaries of facilities information service available thereto;
FIG. 6 is a diagram showing an example of a structure of a facility list information record contained in a file 40;
FIG. 7 is a diagram showing exemplary structures of a facilities information file 50 and a questionnaire data file 60;
FIG. 8 is a diagram showing an example of facility introduction screen information contained in the facilities information file 50;
FIG. 9 is an example of questionnaire screen information contained in the facilities information file 50;
FIG. 10 is a diagram showing an example of a structure of a coupon control file 70;
FIG. 11 is a general flowchart of a facilities information service program to be carried out in the server 30;
FIG. 12 is a detail flowchart of an initial menu processing operation 310 in the facilities information service program;
FIG. 13 is a diagram showing examples of menu screens A, B, C1 and C2 to be displayed on each portable terminal in execution of the initial menu processing operation 310;
FIG. 14 is a detail flowchart showing a facility search processing operation 330 in the facilities information service program;
FIG. 15 is a detail flowchart of a facility introduction processing operation 340 in the facilities information service program;
FIG. 16 is a diagram showing examples of a facility menu screen 211 and a facility introduction screen 212 to be displayed on each portable terminal in execution of the facility introduction processing operation 340;
FIG. 17 is a detail flowchart of a questionnaire processing operation 360 in the facilities information service program;
FIG. 18 is a diagram showing examples of a questionnaire screen 221 and an end-of-questionnaire screen 222 to be displayed on each portable terminal in execution of the questionnaire processing operation 360;
FIG. 19 is a detail flowchart of a coupon service processing operation 380 in the facilities information service program;
FIG. 20 is a diagram showing examples of a coupon selection screen 231, a details-of-coupon screen 232, and a redemption-of-coupon notice screen 233 to be displayed on each portable terminal in execution of the coupon service processing operation 380;
FIG. 21 is a general flowchart of a questionnaire service program to be carried out in the server 30;
FIG. 22 is a detail flowchart of a questionnaire entry form update processing operation 430 in the questionnaire service program;
FIG. 23 is a detail flowchart of a direct mail processing operation 440 in the questionnaire service program;
FIG. 24 is a diagram showing another preferred embodiment of a facility list menu screen; and
FIG. 25 is a diagram showing a further preferred embodiment of a facility list menu screen.

### Detailed description of preferred embodiments

The present invention will now be described in detail by way of example with reference to the accompanying drawings.

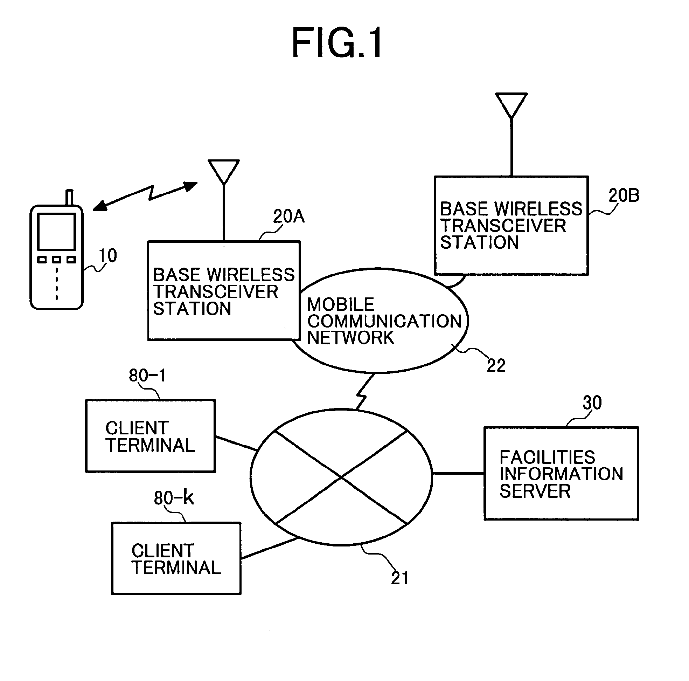

Referring to FIG. 1, there is shown an entire configuration of a facilities information service system according to the present invention.

The facilities information service system of the present invention comprises a facilities information server (provider) 30 connected to a communication network 21, a plurality of client terminals 80-i (i = 1 to k), a mobile communication network 22 including a plurality of base wireless transceiver stations 20 (20A, 20B, ...), and a plurality of portable terminals (mobile terminals) 10, each having a function for making access to the facilities information server 30 through the mobile communication network 22.

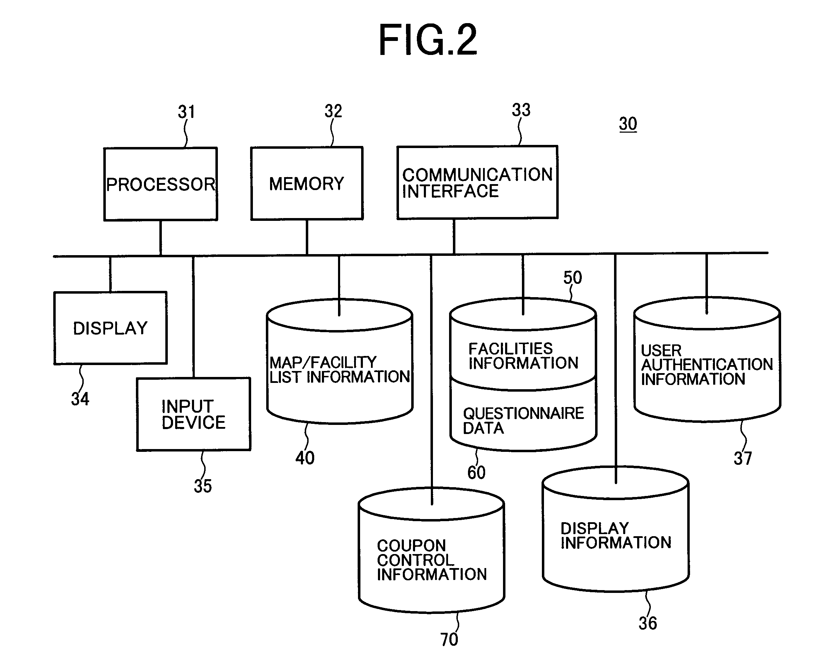

As shown in FIG. 2, for example, the facilities information server 30 comprises a process 31, a memory 32 for storing information-service-related programs and data to be described later, a communication interface 33 for connection to the communication network 21, a display 34, and an input device 35 such as a keyboard and mouse. As data files necessary for information service, the facilities information server 30 is provided with a display information file 36 containing various display information to be presented on each portable terminal 10, a user authentication information file 37, a map/facility list information file 40, a facilities information file 50, a questionnaire data file 60 for storing questionnaire result data, and a coupon control file 70 for storing coupon information on each user.

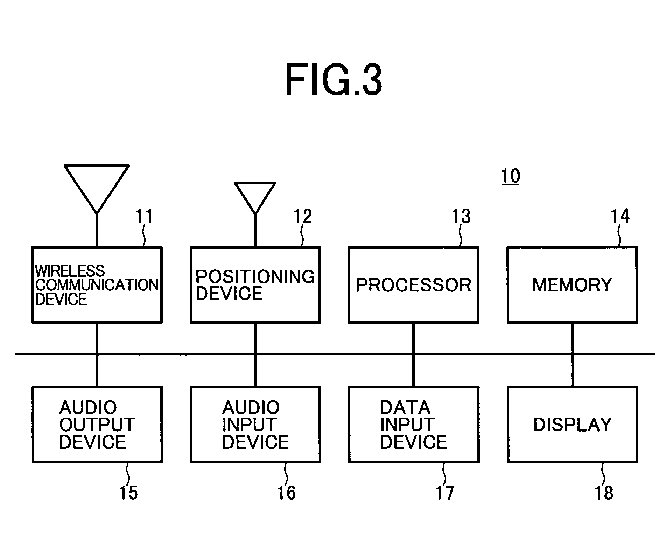

Referring to FIG. 3, there is shown a configuration of the portable terminal 10.

The portable terminal 10 comprises a wireless communication device 11 for communicating with the base wireless transceiver station 20, a positioning device 12 for detecting the current location of the portable terminal through the use of such means as a global positioning satellite, a processor 13, a memory 14, an audio output device 15, an audio input device 16, a data input device 17 having numeric keys, function keys and scroll keys, a display 18 for presenting a text or image, and a power supply circuit (not shown). The audio output device 15 and the audio input device 16 are provided as a speaker and a microphone of a portable telephone circuit, respectively. By operating the keys on the data input device 17, a user makes access to a variety of servers and attains necessary service information through menu screens output on the display 18.

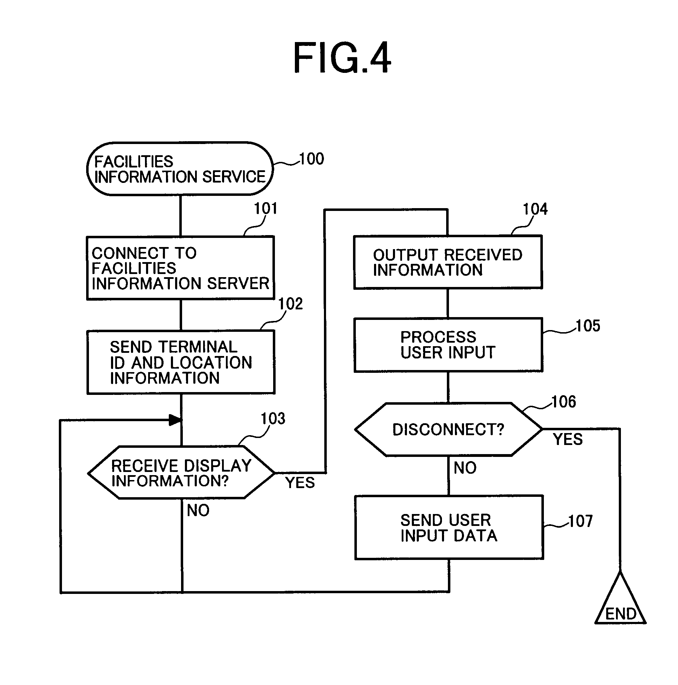

Referring to FIG. 4, there is shown a general flowchart of a facilities information service terminal program 100 to be prepared in the memory 14 of the portable terminal 10 for using facilities information service according to the present invention.

In execution of the facilities information service terminal program 100, a processing step for connection to the facilities information server 30 (step 101) is performed first. In an attempt to set up a connection from the portable terminal 10 to the facilities information server 30, the portable terminal 10 waits for an answer from the facilities information server 30. Then, the portable terminal 10 sends its terminal identifier and its current location information to the facilities information server 30 (102). A connection to the facilities information server 30 is established by keying in a URL (Uniform Resource Locator) for identifying a target resource defined according to the standard protocol HTTP (Hyper Text Transfer Protocol) in the WWW (World Wide Web), for example. A URL of the facilities information server 30 is publicised through various advertisement media and Web pages on the Internet. In the portable terminal 10, the user can register a URL of the facilities information server 30 which has been keyed in for the first access thereto. Thus, in the next and subsequent accesses to the facilities information server 30, the user can specify the facilities information server 30 easily using a menu screen presented on the display 18. The terminal identifier sent to the facilities information server 30 in step 102 is a telephone number of the portable terminal 10, for example, and the current location information sent thereto in step 102 represents an on-map coordinate value of the current location of the portable terminal 10, which has been attained through the positioning device 12.

The portable terminal 10 waits for arrival of display information (screen information) from the facilities information server 30 (103). Upon receiving the display information from the server 30, the portable terminal 10 presents the display information on the display 18 (display screen) (104). When the user performs input operation on the display screen, input data is stored temporarily (105). Then, after the input data is sent to the server 30 in a predetermined message format (107), program control is returned to step 103. In the facilities information service terminal program 100, the above steps 103 to 107 are repeated until the user disconnects the portable terminal 10 from the server 30 (106). Thus, subsequent service information received from the server 30 is successively presented on the display screen.

As will be described later, in facilities information service provided to the portable terminal 10 by the server 30 in the present invention, there is provided such an arrangement that a questionnaire survey including issuance of incentive award coupons can be carried out. When the user indicates intention to participate in a questionnaire survey on a facility information introduction screen (when the user makes a request for a questionnaire), a questionnaire screen containing at least one query item and a plurality of selectable answer items is sent from the server 30 to the portable terminal 10. Then, in execution of the facilities information service terminal program 100 mentioned above, the user answers the query item on each of the questionnaire screens received in succession. Upon completion of answering the queries on the questionnaire screens, the user is given a coupon issued by the source-of-questionnaire facility concerned.

As to the coupon given to the user, acquired coupon information is stored into the coupon control file 70 in the server 30. At the time when the user visits the coupon issuer facility concerned, the user makes access to the server 30 and calls up the acquired coupon information record onto a portable terminal screen from the coupon control file 70. The coupon can be redeemed by showing the portable terminal screen to an employee of the facility. When the user performs input operation for coupon redemption on the portable terminal screen, the corresponding acquired coupon information is set to a redeemed state.

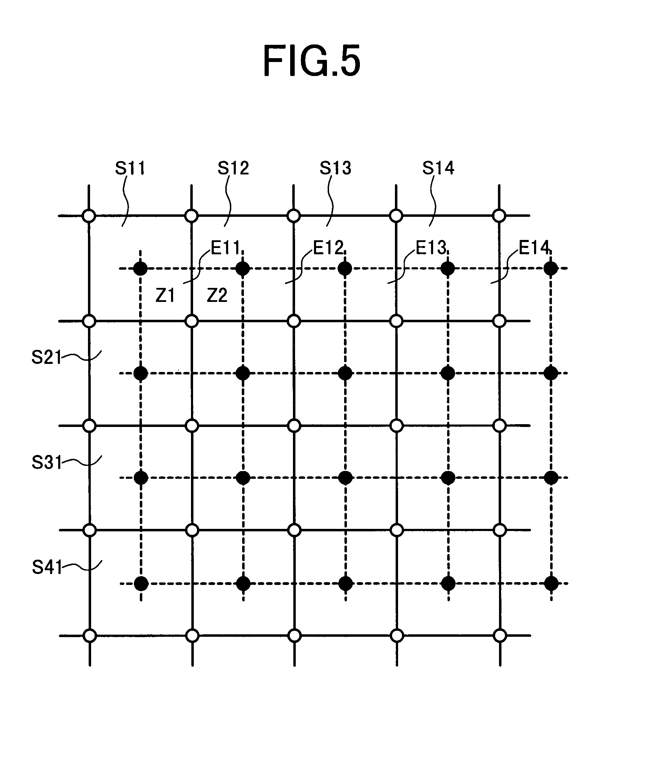

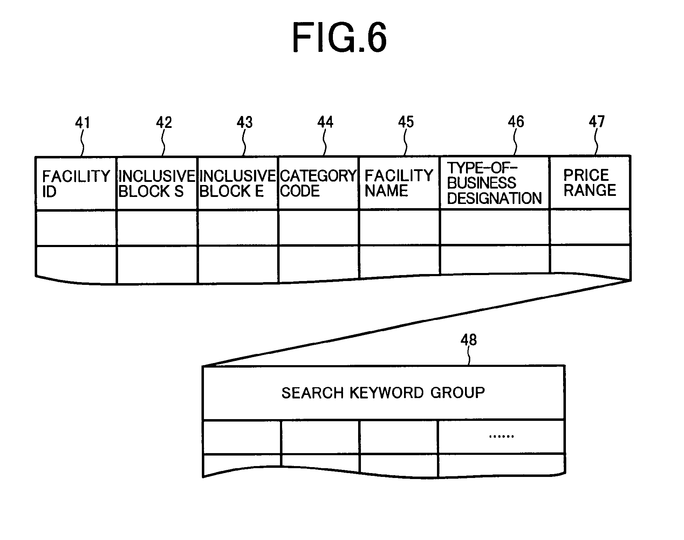

With particular reference to FIGS. 5 and 6, the following describes correspondence relationship between location information of the portable terminal 10 and facilities information service provided by the server 30.

In the present invention, facilities information service is provided under condition that facilities in a predetermined geographic coverage with respect to the current location of each portable terminal user are to be introduced to the terminal user. For setting up association between the current location of each terminal user and facilities to be introduced thereto, an on-map information service area is divided into a plurality of sub-areas, and an information record of each facility is linked with a certain sub-area where the facility is situated, for example.

For optimally delineating a geographic coverage of facilities to be introduced in a case where the terminal user is currently located near the periphery of a sub-area, the information service area is divided into two groups; a first sub-area group and a second sub-area group as shown in FIG. 5, for example. The first sub-area group comprises sub-areas S11, S12, S13, ..., for which boundaries are defined by the open circles, and the second sub-area group comprises sub-areas E11, E12, E13, ..., for which boundaries are defined by the solid circles. If the user (portable terminal) is currently located in a small rectangular zone Z1, facilities in the sub-areas S11 and E11, each of which includes the rectangular zone Z1, are to be introduced to the user. If the user is currently located in a rectangular zone Z2, facilities in the sub-areas S12 and E11, each of which includes the rectangular zone Z2, are to be introduced to the user.

Further, there may be provided third and fourth sub-area groups by drawing boundaries through midpoints between the open circles and those between the solid circles in FIG. 5. If the user is currently located in the rectangular zone Z1, facilities in first to fourth sub-areas, each of which includes the rectangular zone Z1, are to be introduced to the user. In this arrangement, with respect to the current location of each user, it is possible to introduce a group of facilities situated in a range of approximately equal distance in the east-west (longitude) direction and the north-south (latitude) direction.

Referring to FIG. 6, there is shown an example of a facility information record which is contained in a facility list stored in the map/facility list information file 40.

The facility list is referenced for limiting the number of facilities to be introduced according to the current location of each user. In the facility list, each record comprises a facility identifier (ID) 41, an identifier (block number) 42 for indicating a facility-inclusive block in the first sub-area group, a block number 43 for indicating a facility-inclusive block in the second sub-area group, a category code 44 for indicating the kind of facility as attribute information, a facility name 45, a type-of-business designation 46, a price range indication 47 for representing a service charge such as a table charge, lodging charge or play charge at each facility, and a search word group indication 48 for use in a search for a particular facility. Although two kinds of facility-inclusive block numbers are provided in FIG. 6 to meet the arrangement exemplified in FIG. 5, it is to be understood that the kinds of facility-inclusive block numbers may be increased according to the multiplicity of sub-areas.

In the server 30, the map/facility list information file 40 shown in FIG. 2 is used to store the facility list mentioned above and map information for associating the current location information of respective portable terminals with the block numbers in FIG. 5. As will be described later, when the server 30 receives the current location information of each portable terminal, the server 30 makes reference to the map information stored in the map/facility list information file 40 to search for block numbers corresponding to the current location of the portable terminal in the first and second sub-area groups. Further, the server 30 makes reference to the facility list stored in the map/facility list information file 40 to search for facility information records which have facility-inclusive block numbers 42 and 43 matching the block numbers corresponding to the current location of the portable terminal. In this manner, the facilities near the current location of the portable terminal are introduced to the user.

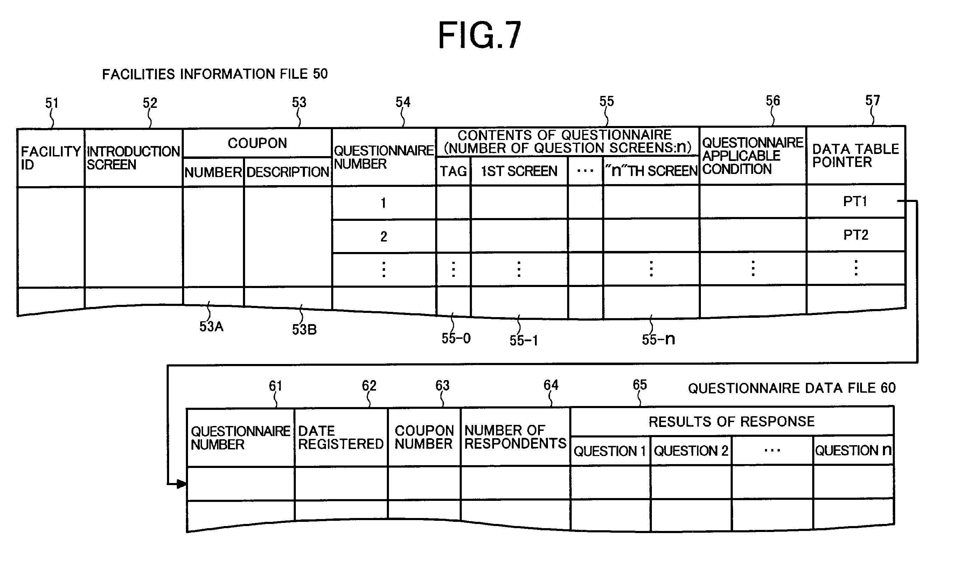

FIG. 7 shows the contents of the facilities information file 50 and the questionnaire data file 60 in the server 50.

The facilities information file 50 comprises a plurality of individual facility information records each having a facility identifier 51. Each of the individual facility information records contains the following fields; introduction screen information 52, coupon information 53, a questionnaire number 54, contents of questionnaire 55, questionnaire application condition information 56, and a data table pointer 57. Note that the fields 53 to 57 are left blank for a facility which does not provide a questionnaire.

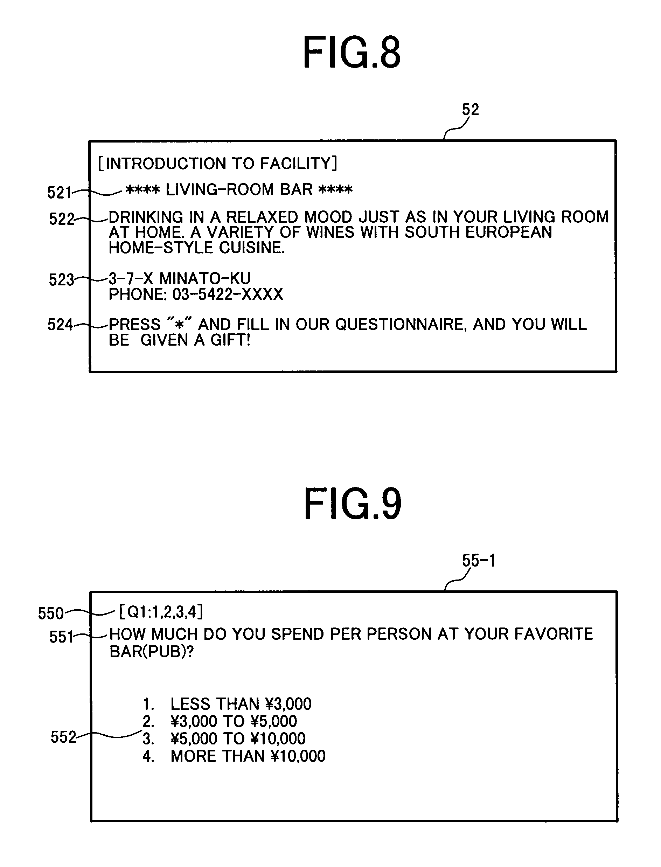

The facility introduction screen information 52 is output onto a portable terminal when the user thereof selects the facility concerned. For example, as shown in FIG. 8, the introduction screen information 52 contains a facility name 521, an introduction message 522, and an address and telephone number 523. For a source-of-questionnaire facility serving as a coupon issuer, the introduction screen information 52 further contains a guide message 524 as an invitation to answer a questionnaire.

In each of the individual facility information records, it is allowed to store the contents of plural kinds of questionnaires 55, each of which is identifiable by the questionnaire number 54. According to the questionnaire application condition information 56 including such factors as time zone and kind of day (weekday/weekend/holiday), different questionnaires are selectable as required by each facility. The contents-of-questionnaire field 55 comprises a tag information item 55-0 and a plurality of questionnaire screen items 55-i (i = 1 to n). The tag information item 55-0 indicates the number of questionnaire screens (question screens) "n" or the kind of coupon to be given in return for answering the questionnaire concerned, for example. Each questionnaire screen 55-i contains a query item (question) 551, answer items 552, and screen-specific tag information 550 indicating a query number and a plurality of selectable answer numbers, for example as shown in Fig. 9. When the user answers a query on one questionnaire screen (the user selects an answer number), the next questionnaire screen comes up.

The data table pointer 57 indicates a pointer address PTj (j = 1, 2,...) corresponding to a questionnaire data table which is prepared in the questionnaire data file 60 in relation to the questionnaire number 54. In a survey using a questionnaire having a questionnaire number "j", users' response data is collected in the questionnaire data table corresponding to the questionnaire number "j".

Each questionnaire data table comprises the following fields; a questionnaire number 61, a date of questionnaire registration 62, a coupon number 63 (code number of a coupon given to a respondent), the cumulative number of respondents up to the present time 64, and response result collection data 65. In the field of response result collection data 65, the cumulative number of selections of each answer number is indicated for each questionnaire screen (question/query number).

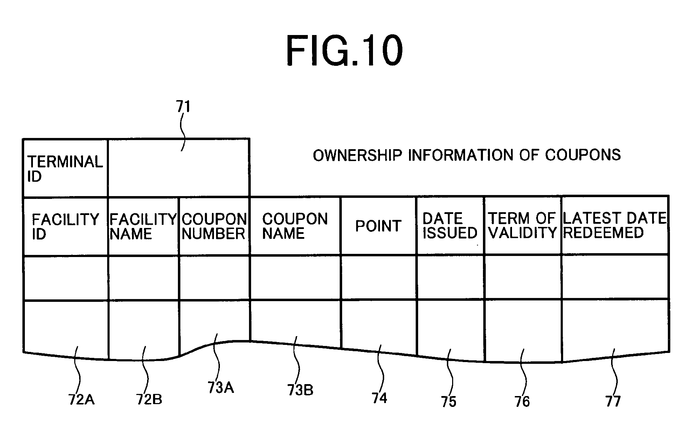

FIG. 10 shows the contents of the coupon control file 70 in the server 30.

The coupon control file 70 is used for storing acquired coupon information for each user. For each portable terminal ID 71, the coupon control file 70 contains a plurality of entries, e.g., a coupon issuer facility identifier 72A, a facility name 72B, a coupon number 73A, a coupon name 73B, a remaining point count 74, a date of coupon issuance (date acquired) 75, a term of validity of coupon 76, and the latest date of coupon redemption 77.

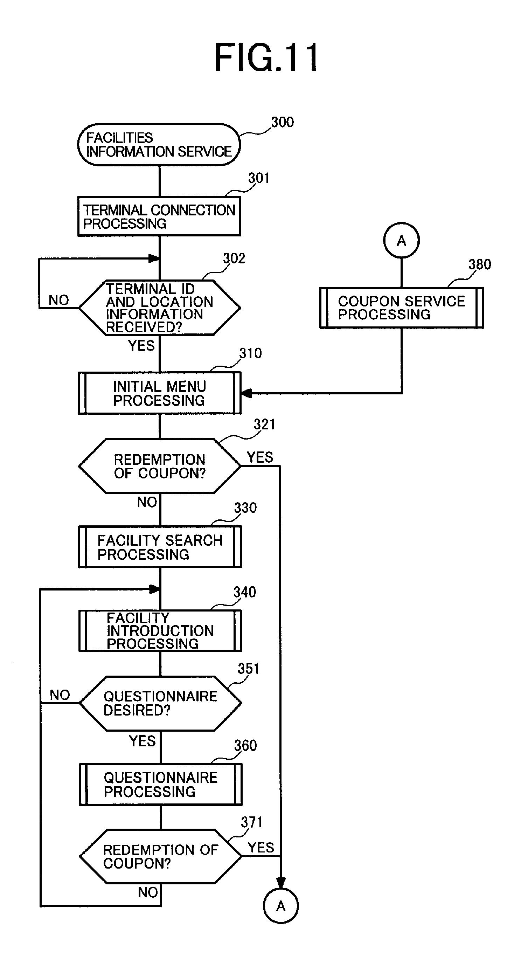

With particular reference to FIGS. 11 to 23, the following describes operations of the facilities information server 30.

FIG. 11 shows a general flowchart of a facilities information service program 300 to be run on the server 30.

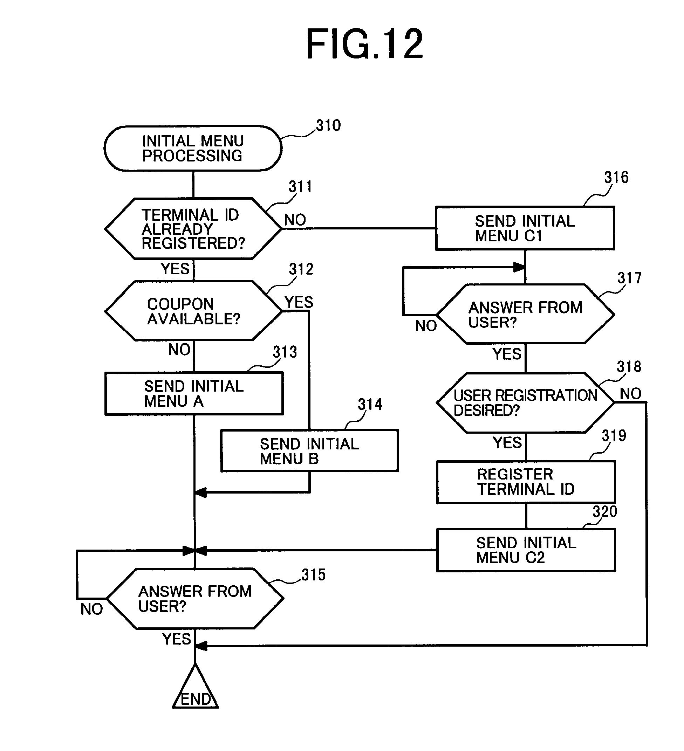

In execution of the facilities information service program 300, when each portable terminal attempts to set up a connection to the server 30 (step 101), a terminal connection processing operation (step 301) is performed. Then, a wait is provided for the server to receive a terminal identifier and location information from the portable terminal (302). Upon receipt of the terminal identifier and location information of the portable terminal, an initial menu processing operation to be described with reference to FIG. 12 is carried out (310) to send a service selection menu screen to the portable terminal.

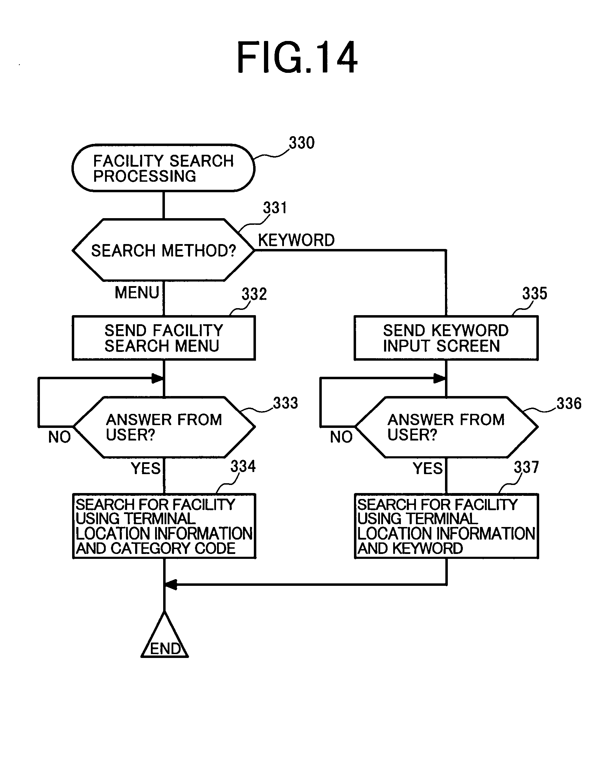

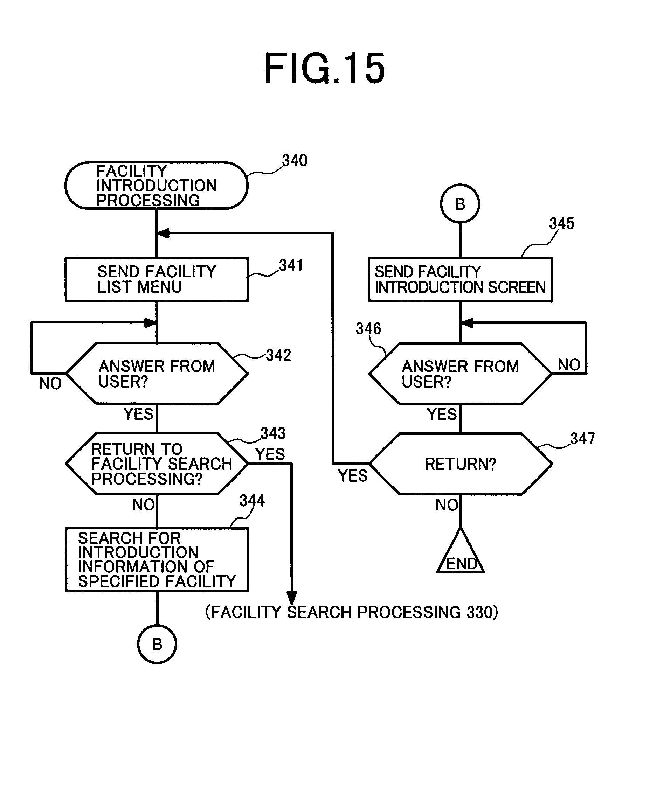

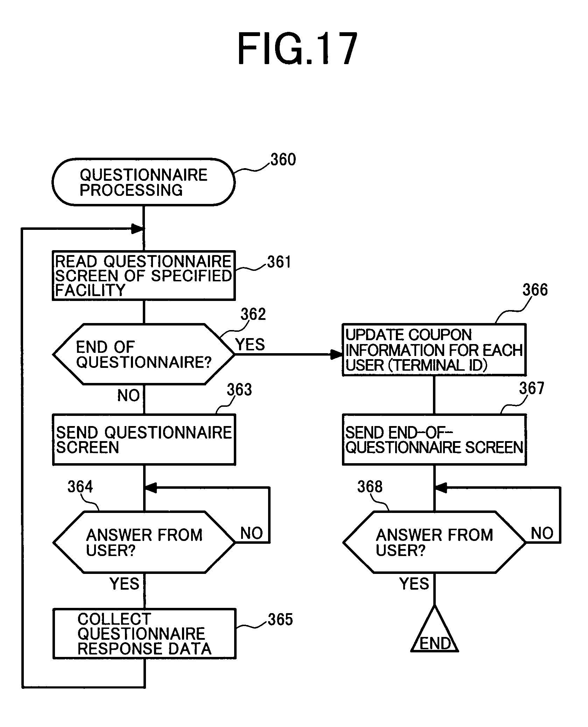

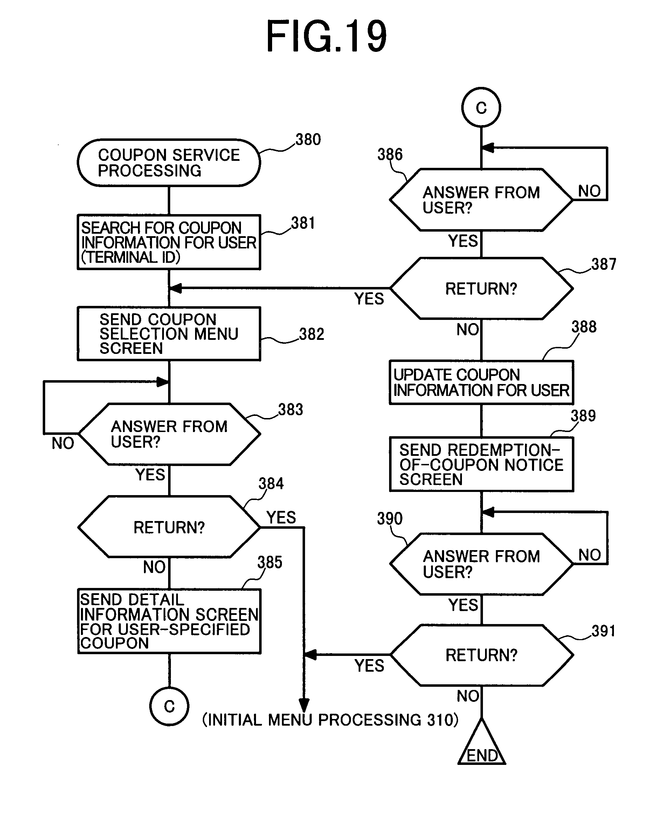

If the user specifies "coupon redemption" on the service selection menu screen (321), a coupon service processing operation to be described with reference to FIG. 19 is carried out (380). Then, program control is returned to the initial menu processing 310. If the user specifies "facility search" on the service selection menu screen, a facility search processing operation to be described with reference to FIG. 14 (330) and a facility introduction processing operation to be described with reference to FIG. 15 (340) are carried out, and then it is checked whether the user wants to answer a questionnaire or not (351). If the user does not want to answer the questionnaire, program control is returned to the facility introduction processing 340. If the user wants to answer the questionnaire, a questionnaire processing operation to be described with reference to FIG. 17 is carried out (360). On completion of the questionnaire processing, it is checked whether "coupon redemption" is specified by the user or not (371). If "coupon redemption" is specified, the coupon service processing 380 is carried out, or else program control is returned to the facility introduction processing 340.

Referring to FIG. 12, there is a detail flowchart of the initial menu processing 310.

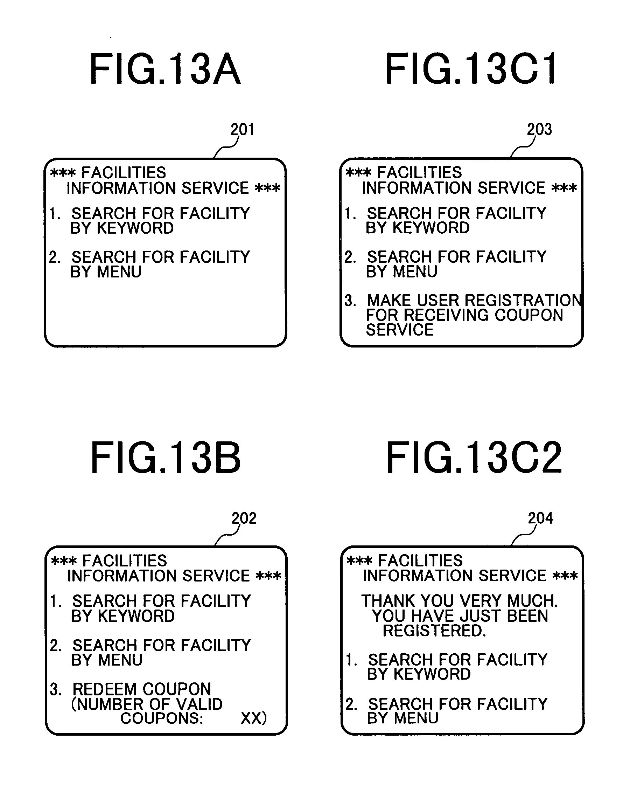

In execution of the initial menu processing 310, a judgement is formed on whether a terminal identifier received from the portable terminal has already been registered in the coupon control file 70 or not (311). If the terminal identifier received from the portable terminal has already been registered therein, the number of remaining valid coupons is checked (312). Then, if there is a valid coupon, an initial menu A is sent to the portable terminal (313). If there is no valid coupon, an initial menu B is sent to the portable terminal (314) and then a wait is provided for an answer from the user (315). As an exemplary form of the initial menu A, FIG. 13 (A) shows a screen 201 on which the user is prompted to select either a keyword search or a menu search as a method of "facility search". As an exemplary form of the initial menu B, FIG. 13 (B) shows a screen 202 on which the user is allowed to specify "coupon redemption" besides "facility search". When a user's answer to the initial menu A or B is received, the initial menu processing 310 is terminated and program control goes to step 321 shown in FIG. 11.

If the terminal identifier received from the portable terminal has not yet been registered in the coupon control file 70, an initial menu C1 is sent to the portable terminal (316) and then a wait is provided for an answer from the user (317). As an exemplary form of the initial menu C1, FIG. 13 (C1) shows a screen 203 on which the user is allowed to specify "user registration" besides "facility search". If "user registration" is not specified as a user's answer to the initial menu C1, the initial menu processing 310 is terminated and program control goes to step 321 shown in FIG. 11. If "user registration" is specified (318), the terminal identifier received from the portable terminal is registered in the coupon control file 70 (319) and an initial menu C2 is sent to the portable terminal (320). Then, a wait is provided for an answer from the user (315). As an exemplary form of the initial menu C2, FIG. 13 (C2) shows a screen 204 which contains a statement indicating the completion of user registration together with "facility search".

Referring to FIG. 14, there is shown a detail flowchart of the facility search processing 330.

In execution of the facility search processing 330, a judgement is formed on which search method the user has selected on the initial menu (331). If the menu search has been selected, a facility search menu is sent to the portable terminal (332) and then a wait is provided for an answer from the user (333). On the facility search menu, a plurality of business categories are indicated, for example, as optional items so that the range of a facility search can be narrowed. These business categories correspond to predefined category codes.

When the user specifies a particular business category on the facility search menu, the map/facility list information file 40 is referenced according to the specified business category and the portable terminal's current location which has been recognised at the start of facilities information service. Thus, in a group of facilities near the current location of the portable terminal, a search is made for any facilities meeting the specified business category (334).

If, in a judgement regarding a search method, it is found that the user has selected the keyword search (331), a keyword input screen is sent to the portable terminal (335) and then a wait is provided for an answer from the user (336). When the user inputs a keyword on the keyword input screen, the map/facility list information file 40 is referenced according to the input keyword and the current location of the portable terminal. Thus, in a group of facilities near the current location of the portable terminal, a search is made for any facilities meeting the input keyword (corresponding to the search keyword 48 in FIG. 6) (337).

Referring to FIG. 15, there is shown a detail flowchart of the facility introduction processing 340.

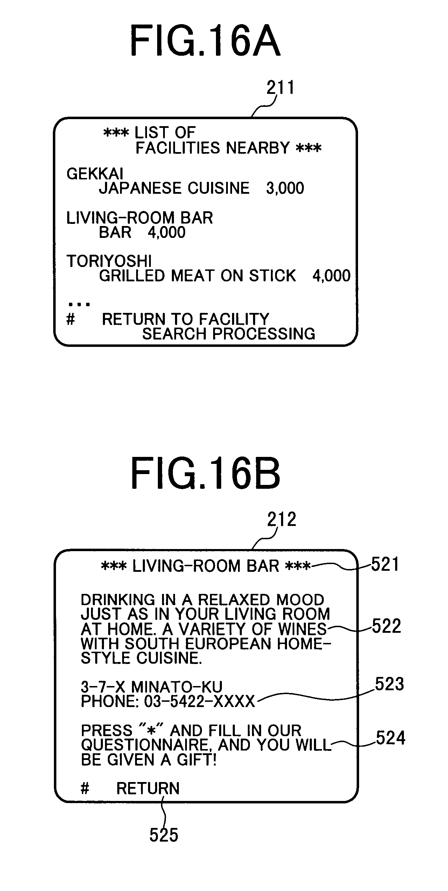

In execution of the facility introduction processing 340, a facility list menu indicating a list of plural facilities found in the facility search processing 330 is sent to the portable terminal (341) and then a wait is provided for an answer from the user (342). The facility list menu presents particular items contained in facility list information on the facilities meeting search conditions specified by the user. Thus, on the portable terminal, there is displayed a menu screen 211 which indicates a list of facility names, categories and price ranges, including a return button (# button) for going back to the facility search processing 330, for example as shown in FIG. 16 (A). If the user presses the return button # as an answer to the menu screen 211, program control is returned to the facility search processing 330.

If the user selects a particular facility on the facility list menu, the facilities information file 50 is searched for an individual facility information record corresponding to the selected facility according to a facility identifier 41 (344). Then, introduction screen information 52 is read out of the individual facility information record and sent as a facility introduction screen to the portable terminal (345). Then, a wait is provided for an answer from the user (346). As an exemplary form of the facility introduction screen, FIG. 16 (B) shows a screen 212 which indicates a facility name 521, an introduction message 522, and an address and telephone number 523 (as in FIG. 8), including a return button # 525. Further, where the facility concerned is a coupon issuer that offers incentive award coupons in return for answering a questionnaire, a questionnaire button * and an invitation-to-questionnaire message 524 are also included in the facility introduction screen 212. If the user presses the return button # on the facility introduction screen 212, program control is returned to step 341 to send the facility list menu 211 again to the user.

If the user presses the questionnaire button * on the facility introduction screen 212, the questionnaire processing 360 is carried out as flowcharted in FIG. 17.

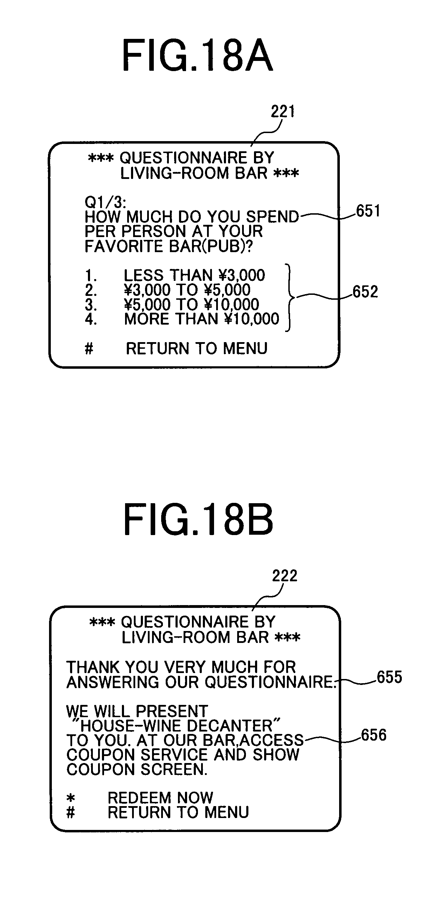

In execution of the questionnaire processing 360, the individual facility information record corresponding the facility specified by the user is checked to select questionnaire entries in the contents-of-questionnaire field 55 according to the questionnaire application condition 56. That is to say, questionnaire screens are read out in succession, starting from the first questionnaire screen 55-1 (361). Thus, questionnaire screen information is sent to the portable terminal (363). In this manner, on the portable terminal, there is displayed a questionnaire screen 221 which indicates a query item 651 and answer items 652, including a return button #, for example as shown in FIG. 18 (A). Then, a wait is provided for an answer from the user (364). When the user answers the questionnaire screen 221, the result of response is reflected in the questionnaire data table corresponding to each of the selected questionnaire entries (365). Then, program control is returned to step 361 to send the next questionnaire screen.

Upon completion of questionnaire screen sending and answering sequences for all the questionnaire screens corresponding to the questionnaire entries concerned (362), coupon information associated with the user identifier 71 (terminal identifier) is updated (366). Then, an end-of-questionnaire screen is sent to the portable terminal (367), and a wait is provided for an answer from the user (368).

As an exemplary form of the end-of-questionnaire screen sent to the portable terminal, FIG. 18 (B) shows a screen 222 which contains a message of thanks for answering the questionnaire 655, a message indicating a coupon given to the user and how to use the coupon 656, a command button * for immediate redemption of the coupon, and a return button # for going back to the facility list menu. When the user presses the command button * as an answer to the end-of-questionnaire screen 222, the questionnaire processing 300 is terminated and program control goes to step 371 shown in FIG. 11.

Referring to FIG. 19, there is shown a detail flowchart of the coupon service processing 380 to be carried out when the user specifies "coupon redemption" at the coupon issuer facility concerned.

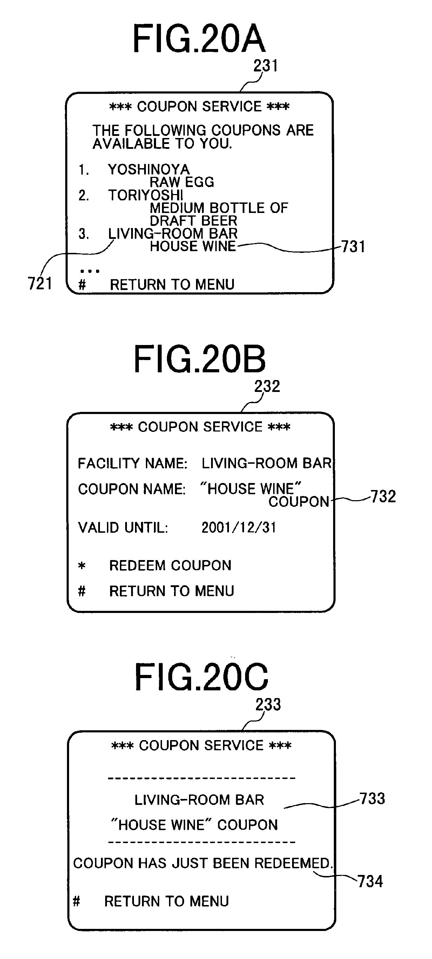

In execution of the coupon service processing 380, the coupon control file 70 is searched for a coupon information record associated with the terminal identifier concerned (381), and a coupon selection menu screen is generated and sent to the portable terminal (382). Thus, for example as shown in FIG. 20 (A), the portable terminal displays a screen 231 which indicates a list of coupon issuer facility names 721 and coupon names 731 for coupons redeemable by the user, including a return button #.

Then, a wait is provided for an answer from the user to the coupon selection menu screen 231 (383). If the user presses the return button # on the coupon selection menu screen 231 (384), program control is returned to the initial menu processing 310. If the user selects any one of the coupon items indicated on the coupon selection menu screen, the corresponding coupon information record is referenced to generate a details-of-coupon screen 232, which contains coupon detail information 732, a coupon redemption button *, and a return button #, for example as shown in FIG. 20 (B). Then, the details-of-coupon screen 232 is sent to the portable terminal (385), and a wait is provided for an answer from the user (386).

If the user presses the return button # on the details-of-coupon screen 232 (387), program control is returned to step 382 to send the coupon selection menu 231 again. If the user presses the coupon redemption button * on the details-of-coupon screen 232, the current date (time) is set up in the field of the latest date of coupon redemption 77 in the corresponding coupon information record contained in the coupon control file 70, and the remaining point count 74 in the coupon information record contained therein is nullified or subjected to subtraction according to award points which have been used for redemption (388). Then, a redemption-of-coupon notice screen is sent to the portable terminal (389), and a wait is provided for an answer from the user (390). Thus, for example as shown in FIG. 20 (C), the portable terminal displays a redemption-of-coupon notice screen 233 which contains a coupon name 733, a message indicating the redemption of the coupon 734, and a return button #.

If the user presses the return button # on the redemption-of-coupon notice screen 233, program control is returned to the initial menu processing 310. If the user performs any operation other than pressing the return button # on the redemption-of-coupon notice screen, program control is also returned to the initial menu processing 310 for handling a subsequent operation to be performed by the user.

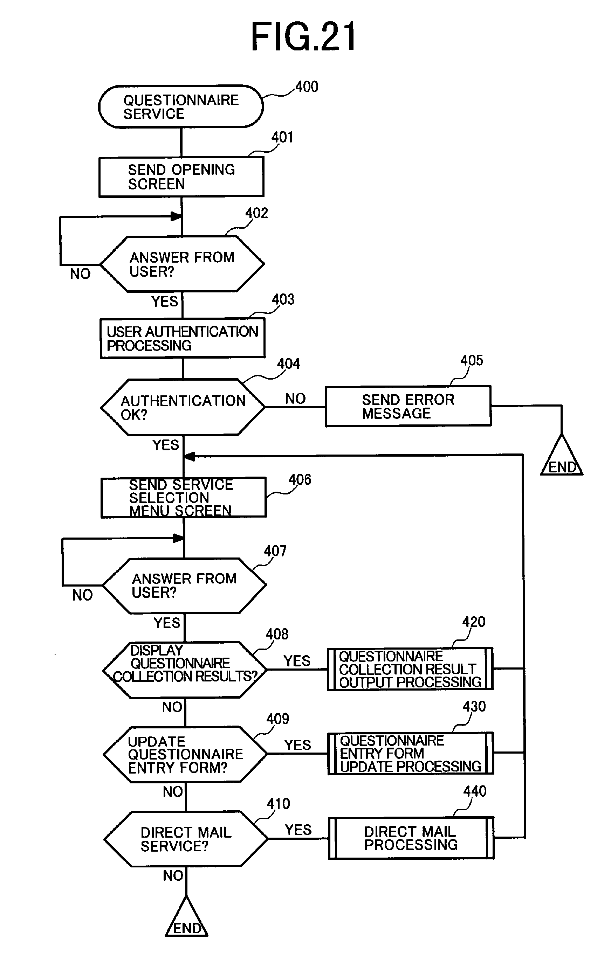

Then, with particular reference to FIGS. 21 to 23, the following describes questionnaire survey service that is provided to client terminals 80-i (i = 1 to k) by the facilities information server 30 shown in FIG. 1. The client terminals 80-i are terminal stations which are installed at the coupon issuer facilities. When it is necessary for an employee of each facility to check questionnaire result data regarding the facility, the employee thereof makes access to the server 30. Then, on menu screen received from the server 30, the employee performs data input operation as required.

FIG. 21 shows a general flowchart of a questionnaire service program 400 to be run on the server 30 in response to a request from each of the client terminals 80-i (i = 1 to k).

In execution of the questionnaire service program 400, an opening menu screen is sent to each client terminal of a source-of-questionnaire facility (401), and then a wait is provided for an answer from a client-user (402). The opening menu screen is intended for checking whether the client-user at the client terminal 80-i is a registered member of the facilities information service system concerned. A facility identifier input box and a password input box are contained in the opening menu screen, for example.

When the client-user enters a facility identifier and a password on the opening menu screen, the user authentication information file 37 is referenced using the facility identifier. Thus, user authentication processing (403) is carried out to check whether the input password matches the pre-registered password concerned. In the result of user authentication (404), if a mismatch is found between these passwords, an error message is sent to the client terminal (405 and the questionnaire service processing is terminated. In a modified embodiment, there may be provided such an arrangement that a screen for re-input of a facility identifier and a password is sent to the client terminal after detection of a password mismatch in the first attempt. Then, if a password mismatch occurs a predetermined number of times in succession, an unauthorised access is recognised to terminate the questionnaire service processing.

If the client-user is authenticated, a service selection menu is sent to the client terminal (406) and a wait is provided for an answer from the client-user (407). On the service selection screen, there is presented a list of service options, e.g., questionnaire collection result display service, questionnaire entry form update processing service, and direct mail service. As specified by the client-user (408 to 410), questionnaire collection result output processing (420), questionnaire entry form update processing (430), or direct mail processing (440) is carried out.

In execution of the questionnaire collection result output processing (420), a questionnaire data table corresponding to the facility identifier concerned is read out of the questionnaire data file 60, response result collection data 65 regarding each query item is arranged in a predetermined format per registered questionnaire number, and the response result collection data thus arranged is sent to the client terminal.

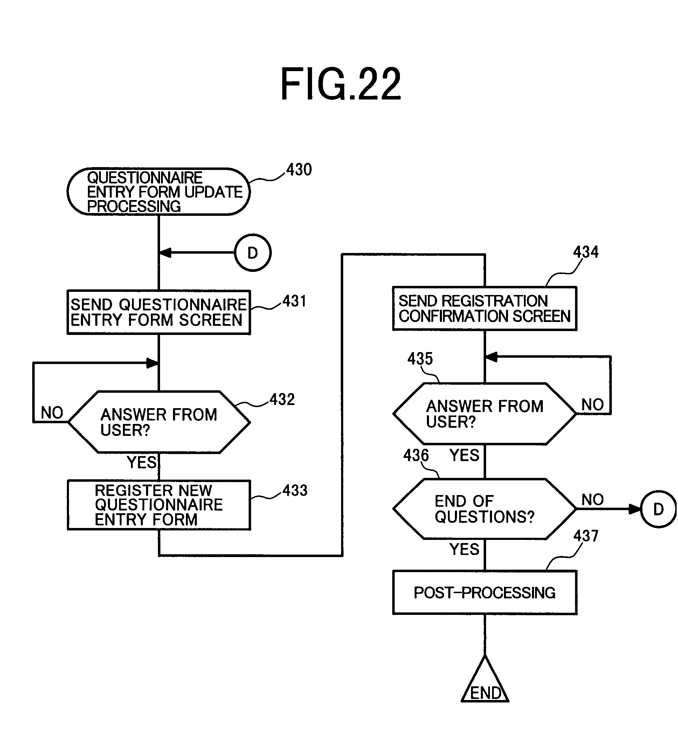

In execution of the questionnaire entry form update processing 430, a screen for preparing a new questionnaire entry form is sent to the client terminal (431), and a wait is provided for an answer from the client-user (432) as shown in FIG. 22. Then, when a new questionnaire entry form is prepared and returned from the client-user, the new questionnaire entry form is registered in the facilities information file 50 in association with the facility identifier (433).

Upon completion of registering a questionnaire entry form for each question screen, a registration confirmation screen is sent to the client terminal (434), and then a wait is provided for an answer from the client-user (435). On the registration confirmation screen, it is asked whether or not to prepare a subsequent new questionnaire entry form, i.e., a subsequent new question screen (436). If, on the registration confirmation screen, the client-user specifies preparation of a subsequent new question screen (a subsequent new questionnaire entry form), program control is returned to step 431. If, on the registration confirmation screen, the client-user specifies the end of preparation of new question screens, a post-processing operation (437) is carried out. In execution of the post-processing, a new questionnaire data table corresponding to each new questionnaire entry form is created in the questionnaire data file 60 and a data table pointer 57 is set up therefor. In preparation of each new questionnaire entry form, an input screen for tag information 55-0 and questionnaire application condition information 56 may be sent to the client terminal at the time of execution of the post processing 437, or may alternatively be sent thereto prior to transmission of the first screen for preparing a new questionnaire entry form (431).

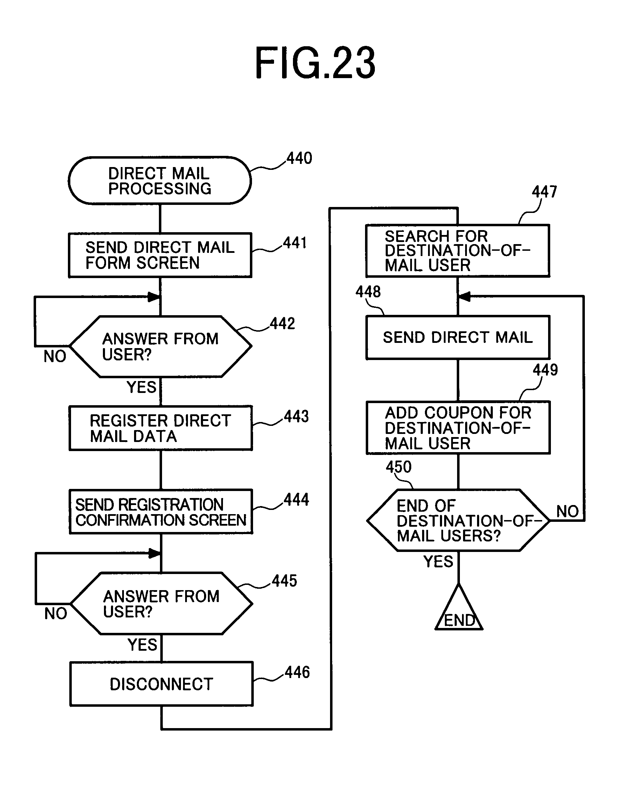

In execution of the direct mail processing 440, a direct mail form screen for preparing direct mail is sent to the client terminal (441), and a wait is provided for an answer from the client-user (442) as shown in FIG. 23. Then, when direct mail is prepared and returned from the client-user, the direct mail is stored into the memory 32 and a registration confirmation screen is sent to the client terminal (444). Then, a wait is provided for an answer from the client-user (445). Upon receipt of an answer of registration confirmation from the client-user, a connection to the client terminal is cut off (446). Thereafter, the coupon control file 70 is searched for coupon information records each having the facility identifier of the client-user, and portable terminal identifiers indicated therein are stored into an address table as direct mail address information of destination-of-mail users (447).

Upon completion of searching the coupon control file 70 for coupon information records each having the facility identifier concerned and storing portable terminal identifiers indicated therein into the address table, the portable terminal identifiers are read out of the address table in succession. Using the portable terminal identifiers as destination addresses, the direct mail stored in the memory 32 is automatically sent to respective destination-of-mail users (448). Besides, as incentive award service to each of the destination-of-mail users, a new coupon record having the facility identifier of the client-user (direct mail source) is added or an incentive award point is added to each existent coupon information record for each destination-of-mail user (449). If any remaining destination-of-mail user is found in the address table (450), program control is returned to step 448 to repeat the processing mentioned above. Then, when the sending of direct mail to all the destination-of-mail users is completed, the direct mail processing comes to an end.

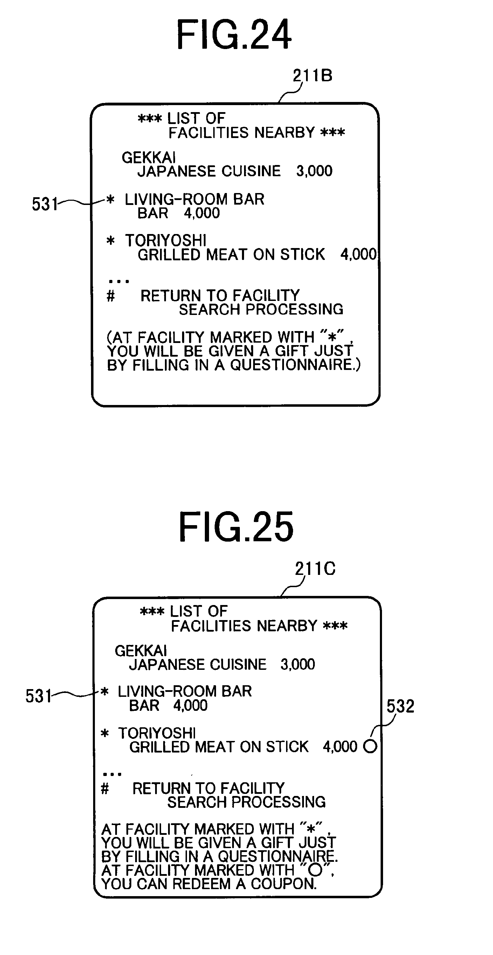

Referring to FIG. 24, there is shown another preferred embodiment of a facility list screen to be sent to each portable terminal in execution of the facility introduction processing 330.

On a facility list screen 211B exemplified in FIG. 24, a mark 531 indicating that a coupon (gift) will be given in return for answering a questionnaire is displayed together with information on facilities. For indication of the mark 531, the facilities information file 50 is referenced according to the facility identifier in facility list information which has been found at facility search step 334 or 337 in execution of the facility introduction processing 330, and it is checked whether or not coupon information 53 is contained in each corresponding facility information record. By indicating whether or not an incentive award coupon is to be issued on the facility list screen as mentioned above, the number of accesses to facility introduction information would increase in regard to facilities that offer incentive award coupons.

Referring to FIG. 25, there is shown another preferred embodiment of a facility list screen to be sent to each portable terminal in execution of the facility introduction processing 330.

On a facility list screen 211C, there are displayed a mark 531 indicating that a coupon will be given in return for answering a questionnaire and a mark 532 indicating that the portable terminal user concerned has acquired a coupon, together with information on facilities. For indication of the mark 532, the coupon control file 70 is referenced according to the facility identifier in facility list information which has been found in facility search step 334 or 337 in execution of the facility introduction processing 330.

While the present invention has been described with respect to preferred embodiments in which facility list information (FIG. 6) and facilities information (FIG. 7) are provided as separate files, it is to be understood that these information may be provided in a form of a single file. Further, although facilities information service is provided from the server 30 to each portable terminal having a telephone function (mobile telephone) 10 by using a telephone number thereof as a terminal identifier (user identifier) in the present preferred embodiments, it will be obvious that an electronic mail address may be used as a terminal identifier. Still further, the portable terminal 10 is not necessarily required to have a telephone function as in a mobile cellular phone or a PHS (Personal Handy-Phone System) terminal, and there may be provided such a modified arrangement that a PDA (Personal Data Assistant) terminal equipped with a electronic mailing function is used as a portable terminal.

Moreover, while a coupon is issued to a questionnaire respondent by a source-of-questionnaire facility, it is also preferable to provide such an arrangement that a coupon of another facility pre-registered to have a business tie-up with the source-of-questionnaire facility is issued to the questionnaire respondent at the same time. In this arrangement, a business tie-up may be any cooperation agreed between facilities from a viewpoint of consumer trends without financial association, e.g., a tie-up between a pub and a Karaoke music bar, or a tie-up between a jewellery store selling engagement rings and a wedding hall or a store dealing with wedding dresses.

For implementation of coupon issuance from another facility having a business tie-up with the source-of-questionnaire facility, there may be provided such an arrangement that a facility identifier of a facility having a business tie-up with the source-of-questionnaire facility is defined in each facility information record contained in the facilities information file 50 in the server 30, a coupon corresponding to the facility information record having the facility identifier of the facility having the business tie-up is also issued in execution of the coupon information update processing step (366) of the questionnaire processing program 360, and information on the coupon issued from the facility having the business tie-up is indicated on the end-of-questionnaire screen 222. Combinations of identifiers of facilities having business tie-up relationship may be defined in a file different from the facilities information file 50, such as a tie-up relation table file or a tie-up database file.

As set forth hereinabove and according to the present invention, facilities which offer incentive award coupons in return for answering a questionnaire are explicitly indicated to users of facilities information service in presentation of a questionnaire survey. Thus, the present invention makes it possible to increase the number of respondents in a questionnaire survey and allows individual facilities to attain accurate information regarding user needs based on questionnaire result data, thereby contributing to improvements in operation of individual facilities. Furthermore, according to the present invention, it is possible to increase a visit rate of customers through incentive award coupon service and invigorate a commercial area in cooperation with facilities having business tie-up relationship.

### List of Reference Numerals

10 portable terminal
11 wireless communication device
12 positioning device
13 processor
14 memory
15 audio output device
16 audio input device
17 data input device
18 display
20 base wireless transceiver station
30 facilities information server
31 processor
32 memory
33 communication interface
34 display
35 input device
36 display information file
37 user authentication information file
40 map/facility list information file
50 facilities information file
60 questionnaire data file
70 coupon control file
80 client terminal

## Claims

1. A facilities information service system in which a server supplies facility introduction information to a portable terminal connected through a communication network upon receiving a request therefor, said server comprising:
a facilities information file for storing introduction information on each facility; and
means for storing, into said facilities information file, facility introduction information including a questionnaire guide message which offers a coupon to be given in return for answering a questionnaire, coupon information, and questionnaire entry form information for each source-of-questionnaire facility;
wherein, when said portable terminal makes a request for introduction information on each source-of-questionnaire facility, said server reads said facility introduction information out of said facilities information file and sends a facility introduction screen including a questionnaire guide message to said portable terminal, and
wherein, when said portable terminal makes a request for a questionnaire, said server sends said questionnaire entry form information to said portable terminal for collecting questionnaire response data from a user of said portable terminal.

2. The system of claim 1,
wherein said questionnaire entry form information comprises a plurality of questionnaire screens each containing at least one query item and a plurality of selectable answer items, and
wherein, when said portable terminal makes a request for a questionnaire, said server sends one of said plural questionnaire screens to said portable terminal, and then, according to a response from said portable terminal user, said server sends a subsequent questionnaire screen to said portable terminal for collecting questionnaire response data concerning each query item.

3. The system of claim 1 or 2, wherein said server further comprises means for, according to coupon information predefined in said facilities information file, issuing a new coupon to said portable terminal user in return for answering a questionnaire.

4. The system of claim 1 or 2, wherein said server further comprises:
a coupon control file for storing data regarding relationship between an acquired coupon and a facility to which said acquired coupon is applicable in association with an identifier of said portable terminal user; and
coupon issuing means by which an acquired coupon information record, which indicates relationship between a source-of-questionnaire facility and coupon information predefined in said facilities information file, is added to said coupon control file in association with an identifier of said portable terminal user in return for answering a questionnaire.

5. The system of claim 4, wherein, using said coupon issuing means, an acquired coupon information record for another facility having a business tie-up with said source-of-questionnaire facility is also added to said coupon control file in addition to said acquired coupon information record for said source-of-questionnaire facility.

6. A facilities information service system in which a server supplies facility introduction information to a portable terminal connected through a communication network upon receiving a request therefor, said server comprising:
a facilities information file for storing introduction information on each facility;
a coupon control file for storing data regarding relationship between an acquired coupon and a facility to which said acquired coupon is applicable in association with an identifier of a user of said portable terminal; and
means for storing, into said facilities information file, facility introduction information including a questionnaire guide message, coupon information, and questionnaire entry form information for each source-of-questionnaire facility;
wherein, when said portable terminal makes a request for introduction information on each source-of-questionnaire facility, said server sends a facility introduction screen including a questionnaire guide message to said portable terminal,
wherein, when said portable terminal makes a request for a questionnaire, said server sends said questionnaire entry form information to said portable terminal for collecting questionnaire response data from said portable terminal user, and then acquired coupon information, which indicates relationship between an acquired coupon and a facility to which said acquired coupon is applicable in association with an identifier of said portable terminal user, is stored into said coupon control file, and
wherein, when said portable terminal makes a coupon redemption service request, said server sends a list of usable coupons to said portable terminal according to said acquired coupon information associated with said identifier of said portable terminal user stored in said coupon control file, and then acquired coupon information corresponding to a coupon which has been redeemed by said portable terminal user is set to a redeemed state.

7. The system of claim 6,
wherein said server further comprises a questionnaire data file in which questionnaire response data from each portable terminal user is collected, and
wherein, as requested by each source-of-questionnaire facility, said server outputs questionnaire result data collected in said questionnaire data file.

8. The system of any preceding claim,
wherein said server further comprises means for sending, to each portable terminal, a list of facilities meeting conditions specified by a user of said portable terminal, and
wherein, when said portable terminal user specifies a facility in said list, said server sends introduction information on said specified facility to said portable terminal.

9. The system of any one of claims 1 to 7,
wherein said server further comprises means for selecting facilities meeting conditions specified by a user of each portable terminal in a group of facilities near the current location of said portable terminal, and for sending a list of facilities thus selected to said portable terminal, and
wherein, when said portable terminal user specifies a facility in said list, said server sends introduction information on said facility thus specified to said portable terminal.

10. The system of claim 8 or 9, wherein said list of facilities contains an indication for identifying a facility which offers a coupon to be given in return for answering a questionnaire, and/or a facility at which coupon redemption by each portable terminal user is available.
